# EUROPEAN PATENT APPLICATION

(11) **EP 3 296 278 A1**
(43) Date of publication of application: **21.03.2018**
(21) Application number: 16189215.3
(22) Date of filing: 16.09.2016
(51) Int. Cl.: C04B 28/00, C04B 40/00, C04B 28/26

(54) **RETARDER FOR ALKALI ACTIVATED BINDER**

(71) Applicant: HeidelbergCement AG, 69120 Heidelberg (DE)
(72) Inventor: Wortmann, Kai, 37603 Holzminden (DE)
(74) Representative: Zellentin & Partner mbB Patentanwälte

(57) **Abstract**

The present invention relates to a retarder for alkali activated binders that comprise an alumino-silicate source and an activator, wherein the retarder contains a boron compound and at least one of acetic acid or an acetate. The invention further relates to an alkali activated binder containing the retarder, a method of retarding alkali activated binders by adding the retarder and to the use of the binder for manufacturing precast products or ready mix concrete.

## Description

The present invention relates to a retarder for use in alkali activated binders, especially geopolymer binders, which delays the setting of the binder paste.

Geopolymers or geopolymer binders are inorganic binders, synthesized from source materials rich in silicates and aluminates. The alumino-silicate source materials can be of geological origin, e.g. metakaolinite, or industrial by-products such as fly ash and ground granulated blast furnace slag (GGBS). The strength developing process results from a chemical reaction where silica and alumina react under highly alkaline conditions. Typically, these conditions can be provided by a combination of alkaline hydroxide solution and an alkaline silicate solution, forming a wet-mix binder system. Alternatively, a dry-mix binder system can be designed by utilizing a solid activator, e.g. solid alkali silicate or a mix of alkali earth-metal carbonates and Portland cement (OPC). The outcome of a geopolymeric reaction is an amorphous three-dimensional network of silicon and aluminium atoms cross-linked by oxygen atoms resulting in a polymeric structure.

In order to create a geopolymeric structure, silicates and aluminates have to be provided by an appropriate choice of raw materials. In principal, they can be chosen from e.g. siliceous fly ash, calcareous fly ash, granulated blast furnace slag, silica fume, and metakaolinite. An addition of quick lime (CaO) was found to be useful for early strength in some instances. The utilization of the industrial by-products fly ash and granulated blast furnace slag is recommended because of economic and environmental benefits. In principle, fly ash and GGBS are the main constituents representing the basis of all geopolymeric systems referred to.

The reactivity of the raw materials, that significantly influences the final performance of the geopolymer binder, originates from intrinsic material properties, such as volume fraction of reactive glassy phase, chemical composition of glassy phase, free lime content, unburned carbon and reactive surface.

A high volume fraction of glassy phase is beneficial for the binder reactivity due to its high solubility. Additionally, the chemical composition determines the reactivity: The higher the CaO content, the higher is the reactivity. Materials high in free lime or high dosages of quick lime should be avoided due to the fact that it acts as an accelerator or a flash set initiator. Un-burned carbon increases the demand for activator and water, which negatively influences the binder performance and costs. Finally, the most crucial physical parameter is the reactive surface: The higher the reactive surface, the higher is the solubility of the source material. Thus, the utilization of slightly ground alumino-silicates is beneficial, which is more pronounced for fly ash than for granulated blast furnace slag. Table 1 summarizes the typical values of key parameters influencing binder performance.

**Table 1**

| **parameter** | **silicious fly ash** | **calcareous fly ash** | **ground granulated blast furnace slag** |
|---|---|---|---|
| glassy phase [wt.-%] | 60-80 | 40-60 | 90-100 |
| Total CaO [wt.%] | 0-10 | 12-40 | 35-45 |
| Reactive CaO [wt.-%] | 0-10 | 10-30 | 35-45 |
| Free lime [wt.%] | 0 | 2-10 | 0 |
| Unburned carbon [wt.-%] | 0-5 | 0-8 | 0 |
| surface [cm²/g] | The reactive surface depens on the grinding fineness. A fineness of about 4000 cm²/g is recommended | | |

The activator provides high pH conditions in order to corrode the glassy structures of the alumino-silicates. Additionally, it contributes silica and alkali oxide supporting the formation of the geopolymeric network. The activator in a geopolymer binder can be composed of different compounds:
- silicates, e.g. sodium or potassium silicate, sodium metasilicate anhydrous or pentahydrate
- hydroxides, e.g. sodium hydroxide, calcium hydroxide, potassium hydroxide
- carbonates, e.g. sodium carbonate
- OPC.

The alkaline activator can be added as a liquid or as a solid compound. In the solid state the activator is preferably ground into the alumino-silicate sources in order to enhance reactivity. In many cases a more simple mixing of the dry components is sufficient. Liquid activators tend to carbonate. This has to be avoided by sealed storage conditions.

Depending on the chemical composition of the alkali sources different pH conditions are provided as shown in table 2.

**Table 2**

| **acitvator** | **Total SiO₂ [Gew.-%]** | **Total Na₂O [Gew.-%]** | **SiO₂/Na₂O [a.u.]** | **pH of a 1% solution at 20°C** |
|---|---|---|---|---|
| liquid sodium silicates | 26-33 | 8-17 | 1,6-3,2 | 11 - 13 |
| sodium metasilicate pentahydrate | 28.5 | 28.7 | 1.0 | 12.5 |
| sodium metasilicate anhydrous | 47.0 | 51.0 | 0.9 | 12.6 |
| sodium hydroxide | - | 76.0 | - | 13.1 |
| sodium carbonate | - | 58.0 | - | 11.4 |

In principle, the basic reaction mechanism of a "classic" geopolymer binder, which consists of alumino-silicates and silicate-based activator, is a chemical process. In this, silicates and aluminates react under highly alkaline conditions, which are typically provided by an alkali hydroxide solution and an alkaline silicate, e.g. sodium hydroxide and sodium silicate.

The result of this reaction is an amorphous three-dimensional network of silicon and aluminium atoms. These are linked by oxygen atoms forming a polymeric structure. The positively charged alkali ions provided by the activator solution balance the negative charge generated by the Al³⁺ atoms in a four-fold coordination. The polymeric structure is similar to the one exhibited by zeolites.

The formation mechanism of the geopolymer network can be divided into three main stages:

In the first stage silicates and aluminates are released from the source material by breaking the structure of the glassy phase. This is induced by hydroxyl ions from the activator. As a result, monomolecular and polycondensated fragments are released to the pore solution.

In this respect, two types of materials can be differentiated. The higher the amount of network-formers in the glassy phase of the source material, such as silica and alumina, the lower is its tendency to be dissolved. This is due to a high degree of polymerization coming along with the formation of strong covalent bonds. Strong silicate/NaOH based activators are needed to activate such kinds of materials, e.g. siliceous fly ashes. The higher the amount of network-modifiers (e.g. Ca²⁺, Mg²⁺, Na⁺, K⁺) in the glassy phase of the source material, the higher is its tendency to be dissolved. The degree of polymerization is fairly low and weak ionic bonds predominate in the structure. Much weaker, less alkaline and corrosive activators based e.g. on alkali or earth alkali metal carbonates can activate these raw materials, e.g. GGBS and calcareous fly ashes.

The second stage is characterized by transportation and coagulation processes supporting the formation of a precursor gel.

In the third stage condensation occurs, forming a solid three-dimensional network of alumino-silicates. Hereby, mono- and polysilicate anions provided by the alkali silicate component of the activator assist the re-organization of the alumino-silicate fragments to solid structures of a higher degree of polymerization.

Given that GGBS and calcareous fly ash sources typically contain high amounts of CaO, hydration processes comparable to cementitious systems are initiated in these systems. Besides geopolymer gel, calcium silicate hydrates and calcium aluminates are formed. The water consuming hydration process increases the pH level of the pore solution and consequently the rate of dissolution. Thus, the presence of calcium contributes to the mechanical strength of the resulting hardened matrix not only by forming C-S-H and C-A-S-H but also by enhancing the geopolymerization process.

The reaction mechanism of geopolymer can also be aided by heat. Heat curing at temperatures up to 90 °C can be applied, a preferred temperature range is from 50 to 80 °C. This can affect the best-practice mix design: High curing temperatures enable the utilization of less alkaline activators.

The mix design of geopolymers is a complex process, in which several key material parameters have to be considered, namely the type of source material (high/low CaO), the activator content and the SiO₂/Na₂O-ratio of activator. Additionally, the water/binder ratio and curing temperature are of high importance.

Low-calcium siliceous fly ashes and other source materials with reactive CaO below approx. 5 wt.% are typical source materials for traditional geopolymer binders. In these low CaO systems exclusively amorphous zeolitic geopolymer structures are formed. Pre-condition to start the polymerization process is a highly alkaline activator or intensive heat curing, usually being composed of liquid sodium silicate and sodium hydroxide, providing a high pH-level of approx. 13.5.

If the reactive CaO content of the alumina-silicates is increased up to 10 wt.%, the pure polymerization process is accompanied by the formation of calcium silicate hydrates. These systems are designated intermediate geopolymers.

Low-CaO and intermediate geopolymers usually develop adequate strength if the key parameters are chosen as summarized in Table 3.

**Table 3**

| **Key parameter** | **Low-CaO geopolymers** | **Intermediate geopolymers** |
|---|---|---|
| Type of source material | siliceous fly ash | calcerous fly ash or mix of siliceous fly ash and additional CaO source (GGBS or calcerous fly ash) |
| Activator content of binder ¹⁾ | 12-17% | 10-15% |
| SiO₂/Na₂O-ratio of activator | 0.75 - 1.0 | 1.0 - 1.25 |
| Water/binder ratio ¹⁾ | ~ 0.35 | ~ 0.40 |
| ¹⁾ In wet binder systems exclusively the solid content of the activator has to be considered by calculating the activator content. The water content of the activator contributes to the total water/binder ration of the system. | | |

The strength level increases in these systems with increasing CaO content. But the CaO content significantly influences the open time and the durability of the system, too. Systems having an elevated CaO need an appropriate retarder system to maintain workability, especially to prolong the open time. Open time means the period of time during which the binder paste has an appropriate consistency for casting and compacting, so that the solidified product has a dense matrix and comprises only a small amount of large(r) compaction pores. The term good workability denotes adequate consistency and compactibility of the paste as well as a sufficiently long open time.

High-CaO systems are characterized by a content of reactive CaO of above 10 wt.%. They are usually made with ground granulated blast furnace slag as source material. The intrinsic reactivity of systems being high in reactive CaO is high enough to be activated even by mildly corrosive compounds, e.g. sodium carbonate or a combination of sodium carbonate and OPC. The dry activator should be co-ground or homogeneously mixed with the alumino-silicates. This design approach allows a one-component dry-mix geopolymer binder.

The activator composition has to be optimized for each alumino-silicate mix. In systems with total CaO from 10 - 15 wt.% a relatively low activator content may provide best performance. In systems with total CaO > 15 wt.% a high activator content may result in optimal strength.

For evaluation of the strength and workability performance of a geopolymer binder, simple mortar tests can be conducted using the mortar composition of EN 196-1 with modified water/binder ratio: 450 g binder, 1350 g standard sand and water as designed (w/b 0.25 - 0.35 recommended). Using a water/binder ratio in the range of 0.25 to 0.35, a well-designed binder composition usually is capable of providing about 10 MPa at an age of 2 days cured at 20 °C. Low CaO systems are more sensitive towards water content variations than medium or high CaO systems. A water increase by w/b 0.05 might half the strength. Using a water/binder ratio in the mentioned range, final strength of a well-designed binder tested at an age of 28 days can go up to 60 MPa. However, final strength strongly depends on the alumino-silicates used and the total binder composition.

Geopolymer binders tend to rapidly loose workability. Many systems have either good strength or good workability performance. The characteristic of this effect mainly depends on the alumino-silicate sources used. Besides SiO₂ and Al₂O₃ content of the glassy phase, a decisive parameter is the CaO content of the total binder system - the higher the CaO, the higher the strength, but usually the shorter the time of good workability.

Both properties, strength and workability, can be influenced by varying the activator content and - in sodium silicate containing activators - the SiO₂/Na₂O ratio of the activator. However, measures positively influencing one property, e.g. strength, usually negatively influence the other property, e.g. workability. If such a system has to be handled, a compromise between strength and workability has to be found considering the application requirements. In contrast to OPC systems, it has been observed that an increased water/binder ratio does not result in extended open time, but only in an elevated level of consistency. The consequence of worse durability is the same, however.

In OPC based binders such problems are typically solved by adding admixtures and optionally also additives. While many effective admixtures, among them retarders and plasticizers, are known for OPC, the prior art on admixtures for geopolymer binders is scarce and findings are contradictory. The sole unitary opinion is that one cannot expect admixtures to have the same effect on geopolymers as they have on OPC.

The term admixture designates mainly organic substances that are used to specifically influence the properties of the binder paste or the hardened system. Besides the organic substances some inorganic substances are also included. Generally, admixtures are such according to DIN EN 934 and with special approval, mention may be made of concrete plasticizers, plasticizers, air entraining agents, sealing agents, retarders, setting accelerators, hardening accelerators, stabilizers and so on. The activator of the alkali activated binder is no admixture, although the substances are used as admixtures in OPC. In geopolymers or more broadly alkali activated binders the activator is part of the binder.

Most of the inorganic substances fall within the term additives, like mineral fillers. Supplemental cementitious materials (SCM) like fly ashes or slags, that are usually added to replace some of the OPC clinker in standard cements, are an essential part of the binder system in alkali activated binders. Thus, in geopolymer binders they are neither admixtures nor additives and also not SCM in the strict sense, since instead of partially substituting clinker they are an indispensable part of the binder forming the binder together with the activator.

Some specific aspects have to be considered in the use of admixtures for alkali activated binders. When adding a liquid admixture, the water content of the admixture has to be taken into consideration in the mix design, due to the high sensitivity of most mix designs to the water/binder ratio. The unburnt carbon component of fly ashes is often problematic in determining desired admixture doses; a slight increase in carbon content can lead to significant increases in the required admixture doses due to selective sorption of the organic components. The results of admixture addition, both desired effects and side-effects (positive and negative) must be understood in the context of what an admixture is supposed to do, as the results discussed can only be judged when it is clear what must be achieved with an admixture. For example, the more hydrophobic a polymer chain is, the more air-entraining it is. This may be either a positive or a negative point in terms of the desired properties of the final material. Hydrophobicity may help in making surfaces water resistant, and some controlled air entrainment is required for freeze-thaw resistance, but too much air is detrimental for durability and permeability. Also, some plasticisers may appear to be effective, but this is not necessarily desirable if only achieved through air entrainment rather than through a fundamentally effective plasticising action. Last but not least, the high pH value of alkali activated binders is problematic for a major amount of admixtures used in OPC. The high pH reduces or destroys efficacy, e.g. by decomposing the organic substance.

According to WO 2008/017413 A1 and EP 2 093 200 A1 boron compounds, lignosulfates, sodium gluconate, sodium glucoheptonate, tartaric acid and phosphorus containing compounds are said to be useful retarders in geopolymer binders. Both relate to very specific applications, namely pumpable compositions for oil drilling. Requirements as to workability, strength development and final strength differ very much for oil drilling from those in normal construction. One especially important difference is the raised temperature during hardening. In the examples boron compounds, lignosulfates and phosphorous compounds are examined. The strength is only measured for boron compounds and was found to decrease upon addition of the retarder. Both documents propose to add accelerators, naming alkali hydroxides and WO 2008/017413 A1 also alkali carbonates. Further, mix design of the binder and the activator shall be adjusted. Thus, one cannot assume that the substances described are generally useful retarders in geopolymer binders.

US 4,306,912 A discloses a binder in which a mixture of slag, natural or synthetic pozzolans, a plasticizer of sulphonated polyelectrolyte and NaOH or NaCO₃ shall partly or fully replace OPC. In this document it is mentioned that US 3,959,004 A, US 3,960,582 A, and US 4,032,353 A propose sodium carbonate combined with a plasticizer provides concrete with good flow properties. Hydrogen carbonates are not effective in the binders tested in US 4,306,912 A, which might be due to a different efficacy in binders based on OPC or a major part of OPC from that in alkali activated binder systems.

Several retarders have been tested in scientific research. A summary with citations is provided by F. Puertas et al. in J.L. Provis et al. "Alkali Activated Materials, State of the Art Report RILEM TC 224-AAM", Springer Verlag, in chapter 6.3, pages 147-149. Phosphoric acid and (hydrogen) phosphates, boron compounds and NaCl among others are reported to have been tested but varying efficacy has been found. Some mixtures have also been proposed.

With regard to plasticizers, which can also improve workability, the test results are also variable, see F. Puertas et al. in chapter 6.4, pages 150-152. Efficacy of lignosulfates seems to be established, while other substances are not providing reliable effects.

In the prior filed but not prior published applications EP 15000784 and PCT/EP2016/000452 a mixture of sodium gluconate and alkali hydrogen carbonate was found to be effective in retarding the setting without reducing strength to an unacceptable degree. It is mentioned that other retarders can be added, among them (hydroxyl) carboxylic acids and carboxylates, especially citric acid, citrates, tartaric acid, and tartrates. The preferred additional retarders are boron compounds.

However, in concrete, especially for precast applications, none of the known retarders was able to provide adequate workability without undue decrease in strength for alkali activated binder systems that comprise substantial contamination with OPC, i.e. from 1 to 4 wt.%. Thus, the object remained to provide effective retarders that will not diminish the early strength at 24 h too much.

Surprisingly it was now found that a combination of boron compounds with acetic acid and/or acetates is able to retard setting sufficiently, while maintaining adequate workability and a sufficient strength at 24 h.

Therefore, the above object is solved by the present invention with a retarder mixture for alkali activated binders, that comprises a boron compound and at least one of acetic acid or an acetate.

The term alkali activated binder means classical geopolymers as well as compositions containing alumino-silicates or aluminates and one or more of silicates, calcium silicates, and calcium alumino silicates together with an activator and which harden at least partially by forming three dimensionally linked alumino-silicate-polymer network. Additionally, these compositions may form calcium silicate hydrates (C-S-H), calcium aluminate silicate hydrates (C-A-S-H), metal metal hydroxides (e.g. representatives of the hydrotalcite group) and calcium metal hydroxides (e.g. representatives of the calcium aluminate hydrate group). The term alkali activated binders with low CaO content (or level) designates a CaO content of up to 10 wt.% with respect to the total weight of the binder. Alkali activated binders with high CaO content means a CaO content of at more than 10 wt.%, preferably more than 15 wt.%.

Raw materials for the alumino-silicates in manufacturing alkali activated binders are generally all natural and synthetic materials that provide silica and alumina in amorphous form, so that the dissolution in alkaline environment and subsequent formation of the threedimensional network can take place. Preferably fly ashes, which can be siliceous or calcareous, ground granulated blast furnace slag and other slags containing alumina and silica glassy phase are used, but others are also possible like meta kaolins, silica dust, rice husk ash, red mud. Depending on the chemical composition of the raw materials single materials or mixtures are used, that provide the desired alumina content, silica content, and fulfil other parameters like ratio Si/Al and ratio (Si+Al)/Ca.

The raw materials can be pre-treated. For example extraction or burning steps can be used to remove or decrease carbon and other organic components. A hydrothermal treatment can be applied to convert inert crystalline phases into reactive amorphous phases. Typically, the raw materials are ground to a desired fineness as known per se. Fly ashes or dusts from cement manufacturing usually have (almost) the desired fineness and need no (only little) grinding. If raw materials shall be mixed it is advantageous to grind them together. Grinding takes place in the known devices and in the known manner. As usual grinding aids like alkanol amines can be added, e.g. triisopropanolamine or triethanolamine.

The activator is chosen from the known compounds. As already described, these are predominantly silicates, hydroxides, carbonates, sulfates, and OPC or OPC clinker as well as combinations of two or more of them. Preferred silicates are sodium silicate, potassium silicate, anhydrous sodium meta silicate, and sodium meta silicate pentahydrate. Suitable hydroxides are alkali hydroxides and earth alkaline hydroxides as well as oxides that react to form hydroxides upon contact with water. Preferred hydroxides are NaOH, KOH, and Ca(OH)₂. Sodium carbonate is preferred as carbonate. Suitable sulfates are sodium sulfate and potassium sulfate. Waste fractions of OPC manufacturing, e.g. process meals and dusts, can also be used as OPC and OPC clinker.

The kind and type of activator is adapted to the raw material used as source of alumina and silica in a manner known per se. Typical amounts range 5 to 30 wt.%, preferably from 10 to 20 wt.% with respect to the solid content of the binder. In case of OPC or OPC clinker as activator less than 5 wt.% are typically used, so that the difference between the alkali activated binder according to the invention and standardized CEM III binders is the amount of OPC clinker, namely, usually less of it is used than in CEM III.

Dry activators can be added during grinding of the raw material or raw material mixture or they are added after grinding, if needed after having been ground separately. Liquid activators are advantageously added with the mixing water, but can of course also be added before or after the water.

Water is added primarily to adjust flowability and to provide a medium for restructuration of the alumina silicates, aluminates and silicates. In high CaO content binders the water also enables hydraulic reaction that contributes to hardening of the paste. The water/binder ratio (w/b) denotes the ratio between water and binder, wherein binder is the sum of alumino silicates, alumina and silicates as well as the activator. The water contains not only water added during mixing the paste, but also water added with the components like the activator and with admixtures. Bound water is also taken into account. Typically w/b in the range from 0.2 to 0.5, especially from 0.2 to 0.4, most preferred from 0.2 to 0.3, are useful. As a rule the amount of water should be as low as possible, so a w/b of about 0.2 is most preferred.

The fineness according to Blaine of the solid binder parts usually ranges from 3000 to 5000 cm²/g, especially from 3500 to 4500 cm²/g and most preferred is about 4000 cm²/g. Up to a certain limit a higher fineness increases reactivity, but it requires higher grinding energy and more water or retarder. Therefore, a suitable compromise is chosen for each binder as known per se.

Besides the binder components alumino-silicate source (alumino silicate, alumina, silicate) and activator(s) the binder according to the invention contains a retarder mixture comprising a boron compound and at least one of acetic acid and acetate in order to ensure adequate workability.

The retarder usually comprises 0.1 to 5 wt.% boron compound and 0.05 to 0.7 wt.% acetic acid/acetate relative to the binder defined as sum of alumino silicates, alumina and silicates plus activator. The preferred lower limit for the boron compound is 0.3 wt.%, the preferred upper limit 1,5 wt.%. The preferred lower limit for the amount of acetic acid/acetate is 0.1 wt.%, more preferred 0.2 wt.%. The preferred upper limit is 0.5 wt.%, more preferred 0.3 wt.%.

Acetic acid can be used in concentrated form or diluted, when a solution is used the water has to be taken into account for the w/b ratio. The amount specified in the preceding paragraph refers to the substance without water. Acetate is used herein to denote salts of acetic acid, preferably sodium acetate, but also salt mixtures with two or more different cations. Acetate can be used in solid form or as solution. Like with acetic acid, the water in a solution has to be taken into account for the w/b and the amounts refer to the dry substance. It is of course also possible to use a mixture of acetic acid and acetate. When the designation acetic acid/acetate is used herein, it means either acetic acid or acetate or any mixture of them.

Preferably borax is used as the boron compound, boric acid and borates are also possible but less preferred. Mixtures of boron compounds are also feasible.

The ratio of boron compound to acetic acid/acetate preferably ranges from 50:1 to 0.1:1, more preferred from 5:1 to 0.5:1 and most preferred from 2:1 to 1:1.

Further retarders may be used in addition, but preferably the combination of boron compound with acetic acid and/or acetate is the sole retarder used.

The retarder according to the invention can be added as mixture or as single compounds. When solid retarders are used a mixture is preferably added on top of the aggregates with the binder and before the mixing water is dosed. In case of a retarder mixture in the liquid form the dosage is preferable with the mixing water. When boron compound and acetic acid/acetate are added separately, it is preferred to admix liquid substances like acetic acid to or together with the mixing water and solid substances like e.g. borax as boron compound or acetate to the dry binder. It is especially preferred to use only or predominantly solid substances to get a ready to use binder. However, solid substances can of course be dissolved. The point in time of adding the retarder is not restricted. It is advantageous to add it at the latest when the binder is mixed with water and aggregate, so that a good dispersion in the paste is ensured. The retarder can be added in one step or over a period of time continuously or step wise.

The retarder according to the invention is able to retard setting and maintain the paste workable also for alkali activated binders that have a substantial contamination with cement. Thereby, the strength at 24 h is not unduly decreased. Thus, precast concrete parts can be removed from the form as usual. Borax alone failed to provide adequate retardation without detrimental effect on the strength after 24 h and/or durability. Acetic acid alone failed as well in case of adequate retardation. Either workability was lost too fast or strength after 24 h was too low. Other retarders tested failed, too. It is an advantage of the present invention that a smaller amount of borax can be used. Borax is considered mutagenic so a restriction of its amount is beneficial.

Being able to reliably retard setting of the cement paste made from alkali activated binders enables them to be used for ready mix concrete, for precast parts and also in applications like floor screed, pumpable concrete and for mortar.

The invention will be illustrated further with reference to the examples that follow, without restricting the scope to the specific embodiments described. If not otherwise specified any amount in % or parts is by weight and in the case of doubt referring to the total weight of the composition/mixture concerned.

The invention further includes all combinations of described and especially of preferred features that do not exclude each other. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material. The terms contain and comprise define the presence of the specified feature but do not exclude the presence of further features.

### Examples

The procedure for casting a mortar/concrete cylinder, with vibro-compaction and pressing process to measure the compressive strength of zero slump concrete was taken from a publication of R. Bornemann, University Kassel, publication series: Baustoffe und Massivbau, Structural Materials and Engineering Series, booklet 4, No. 4 "Untersuchungen zur Modellierung des Frisch- und Festbeton-verhaltens erdfeuchter Betone". The procedure described therein was adjusted as described in the following.

Cylindrical steel moulds with a stacking frame were used. The mould has an inner diameter of 100 mm, a height of 120 mm, the stacking frame has a height of 50 mm. The resulting overall height, incl. the bottom plate, is about 180 mm. The mould is typically made up of four parts, i.e. the bottom, two side parts and the stacking frame. Assembly is made with bolts. The used steel weight has a diameter of 98 mm with a height of 200 mm. A grip is welded on the top for better handling. The mass of the steel weight is 11,877 kg. Therefore, the resulting load is 0,015 N/mm².

### Execution:

- The mould is greased with petroleum jelly and filled with 1.5 kg mortar or concrete and placed on a vibrating table, type A according to EN 196-1.
- The weight is placed on top of the concrete. A free movement is ensured.
- The concrete is compacted for 120 seconds.
- After compaction, the weight is removed by carefully rotating the weight during lifting to facilitate removal.
- Afterwards the mould is placed either in standard climate conditions or in an oven for the chosen heat treatment. For curing, mortars were placed in an oven for 24 h at 55 °C; concretes having fly ash as main binder raw material were cured at 60 °C during 24 h.
- The concrete specimen is demoulded shortly before testing for compressive strength; in case of unevenness, the surface is polished to planarity.

With this method, strength after 24 h was measured for pastes cast into the cylinder directly after mixing and for pastes that were allowed to stand for 45 minutes before casting. Only pastes that maintain workability for at least 45 min. develop adequate strength when cast after standing 45 minutes. In addition or alternatively, setting begin and end were determined according to DIN EN 196 for pastes.

### Example 1

Alkali activated binders were made from 80 wt.% ground granulated blast furnace slag with the properties in table 4 with 10 wt.% analytical grade sodium carbonate and 10 wt.% analytical grade sodium silicate as activator. The slag had a density of 2.9 g/cm³, a fineness of 4240 g/cm³ acc. to Blaine and no loss on ignition at 950 °C (weight increased by 1.25%). Pastes were mixed from 1 part binder, 4 parts sand and 0.3 parts water, i.e. with a w/b of 0.3. The amounts of retarder used relative to the binder as well as setting times and/or strength measured as described are listed in table 5.

**Table 4**

| oxide | SiO₂ | Al₂O₃ | TiO₂ | MnO | Fe₂O₃ | CaO | MgO | K₂O | Na₂O | SO₃ |
|---|---|---|---|---|---|---|---|---|---|---|
| content [wt.%] | 33.82 | 13.22 | 1.2 | 0.21 | 0.58 | 37.43 | 9.21 | 0.51 | 0.46 | 2.76 |

**Table 5**

| No. | content [wt.%] of | | | setting [min.] | | 24h strength [MPa] | |
|---|---|---|---|---|---|---|---|
| | borax | acetic acid | sodium acetate | begin | end | directly cast | cast after 45 min. |
| 1 | 0.5 | 0.5 | - | 125 | 145 | 39.0 | 46.9 |
| 2 | - | 0.5 | - | 13 | 20 | - | - |
| 3 | 1.5 | - | 0.3 | 85 | 110 | - | - |
| 4 | - | - | 0.3 | 10 | 20 | - | - |
| 5 | - | - | - | 5 | 15 | 26.9 | 1.2 |
| 6* | 1.5 | - | - | 30 | 50 | 39.6 | 42.1 |

| | | | | | | | |
|---|---|---|---|---|---|---|---|
| *the binder contained 84 % slag and 8 % of each activator | | | | | | | |

The results show that the combination of borax with acetic acid or sodium acetate provides adequate retardation, the time until setting begin is 125 and 85 minutes for samples 1 and 3, respectively. Neither acetic acid alone (sample 2) nor sodium acetate alone (sample 4) provides significant retardation of setting, the begin is only marginally later than for the sample 5 without retarder. For a boron compound, borax, as sole retarder the setting retardation is better than for actiec acid/acetate alone, but not sufficient. Sample 6 used a higher amount of ground granulated blast furnace slag and lower amount of activator, which is beneficial for workability. The strength values measured on mortar that were poured into the cylinder directly after mixing are adequate for samples 1, 5, and 6. However, the dramatic drop for sample 5 when the mortar was allowed to stand 45 minutes before casting clearly shows that the mortar without retarder was not workable anymore 45 min. after mixing. The binder retarded according to the invention maintained workability as shown by the even improved strength of the cylinder cast 45 minutes after mixing.

### Example 2

To simulate the effect of a contamination with cement and examine the influence of high acetic acid dosages, binders were made as in example 1, but with 2 wt.% of each activator replaced by a CEM I 52,5 N. The results are presented in table 6.

**Table 6**

| No. | content [wt.%] of | | | setting [min.] | | 24h strength [MPa] | |
|---|---|---|---|---|---|---|---|
| | borax | acetic acid | sodium acetate | begin | end | directly cast | cast after 45 min. |
| 7 | 1.5 | 0.1 | - | - | - | 37.6 | 42.7 |
| 8 | 1.5 | 1.0 | - | - | - | 2.4 | 2.8 |
| 9 | 1.5 | - | - | 20 | 30 | - | - |

It is immediately apparent that even 4 wt.% cement are no problem with the retarder according to the invention in sample 7. Borax alone is unable to provide sufficient retardation in such a system, setting is finished after 30 minutes for sample 9. From the comparison with too high amounts of acetic acid in sample 8 it is clear that sufficient retardation cannot be achieved with high amounts of acetic acid. At 1 % acetic acid the binder does not develop any strength anymore.

### Example 3

The retarder according to the invention was tested in several different alkali activated binder systems. Besides slag as in example 1 and 2 a fly ash with the chemical composition shown in table 7 was used. The results are presented in table 8.

**Table 7**

| oxide | SiO₂ | Al₂O₃ | TiO₂ | MnO | Fe₂O₃ | CaO | MgO | K₂O | Na₂O | SO₃ |
|---|---|---|---|---|---|---|---|---|---|---|
| content [wt.%] | 50,32 | 19,1 | 0,7 | 0,02 | 4,27 | 10,51 | 3,13 | 1,73 | 6,24 | 0,53 |

**Table 8**

| No. | components | | | | 24h strength [MPa] | |
|---|---|---|---|---|---|---|
| | alumino-silicate source | activator | borax | sodium acetate | directly cast | cast after 45 min. |
| 10 | 80 % fly ash | 20 % (Na₂SiO₃)n | 1.0 % | 0.3 % | 42.2 | 43.5 |
| 11 | 80 % fly ash | 20 % (Na₂SiO₃)ₙ | 0.5 % | 0.3 % | 57.1 | 43.2 |
| 12 | 85 % slag | 15 % cement | 1.0 % | 0.3 % | 39.6 | 52.7 |

As can be seen, all three binders have a good workability over at least 45 minutes after mixing. Very small amounts of borax like 0.5 wt.% can suffice when combined with acetic acid or acetate according to the invention. In the prior art typically borax has to be used in amounts of up to 5 wt.%, i.e. ten times more.

### Example 4

Comparisons were made with other organic acids typically used as retarder in OPC and with the retarder proposed by EP 15000784 / PCT/EP2016/000452 comprising sodium gluconate. The procedures were the same as in example 1, table 9 summarizes the results. The results for samples 1 and 3 are reproduced here to ease comparison.

**Table 9**

| No. | retarder / amount in wt.% | setting [min.] | | 24h strength [MPa] | |
|---|---|---|---|---|---|
| | | begin | end | directly cast | cast after 45 min. |
| 1 | borax / 0.5 + acetic acid / 0.5 | 125 | 145 | 39.0 | 46.9 |
| 3 | borax / 1.5 + sodium acetate / 0.3 | 85 | 110 | - | - |
| 13 | borax / 0.5 + citric acid / 0.3 | 20 | 40 | 50.5 | 4.0 |
| 14 | borax / 0.5 + tartaric acid / 0.3 | 20 | 45 | 46.9 | 5.2 |
| 15 | NaHCO₃ / 0.5 + sodium gluconate / 1.5 | 15 | 25 | 47.2 | 7.7 |

These tests show that unlike acetic acid and sodium acetate the common retarders citric acid and tartaric acid do not work in combination with borax. Likewise, the retarder combination of sodium hydrogen carbonate and sodium gluconate was not efficient for the tested system.

## Claims

1. Retarder for alkali activated binders comprising an alumino-silicate source and an activator, **characterized in that** the retarder comprises a boron compound and at least one of acetic acid or an acetate.

2. Retarder according to claim 1, **characterized in that** 0.1 to 5 wt.% boron compound and 0.05 to 0.7 wt.% acetic acid and/or acetate relative to the binder defined as sum of alumino-silicate source plus activator are contained.

3. Retarder according to claim 2, **characterized in that** is 0.3 to 1,5 wt.% boron compound are contained.

4. Retarder according to claim 2 or 3, **characterized in that** 0.1 to 0.5 wt.%, preferably 0.2 to 0.5 wt.%, and most preferred 0.3 wt.% acteitc acid and/or acetate is contained.

5. Retarder according to anyone of claims 1 to 4, **characterized in that** the boron compound is borax, boric acid, borate or a mixture thereof, preferably borax.

6. Retarder according to anyone of claims 1 to 4, **characterized in that** the retarder consists of borax, boric acid, borate or a mixture thereof, preferably borax, and acetic acid, sodium acetate or a mixture thereof.

7. Retarder according to anyone of claims 1 to 6, **characterized in that** the weight ratio of boron compound to acetic acid, acetate or acetic acid and acetate ranges from 50:1 to 0.5:1, preferably from 5:1 to 1:1 and most preferred from 2:1 to 1:1.

8. Alkali activated binder comprising an activator and an alumino-silicate source, charcaterized by containing a retarder according to anyone of claims 1 to 7.

9. Alkali activated binder according to claim 8, **characterized in that** the alumino-silicate source is an alumino silicate or a combination of aluminates and at least one of silicates, calcium silicates and calcium aluminium silicates.

10. Alkali activated binder according to claim 8 or 9, **characterized in that** the alumino-silicate source is chosen from fly ashes, which can be siliceous or calcareous, ground granulated blast furnace slag and other slags containing alumina and silica glassy phase, and mixtures thereof.

11. Alkali activated binder according to anyone of claims 8 to 11, **characterized in that** the activator is chosen from silicates, hydroxides, carbonates, sulfates, and OPC or OPC clinker as well as combinations of two or more of them.

12. Alkali activated binder according to anyone of claims 8 to 11, **characterized in that** the activator is contained in an amount from 5 to 30 wt.%, preferably from 10 to 20 wt.%.

13. Alkali activated binder according to anyone of claims 8 to 12, **characterized in that** the fineness according to Blaine of the solid binder parts ranges from 3000 to 5000 cm²/g, especially from 3500 to 4500 cm²/g and most preferred is about 4000 cm²/g.

14. Alkali activated binder according to anyone of claims 8 to 13, **characterized in that** it is a dry mixture wherein the activator and the retarder are dry, solid substances.

15. Method for retarding the setting of alkali activated binders, **characterized in that** a retarder according to anyone of claims 1 to 7 is added as retarder.

16. Use of an alkali activated binder according to anyone of claims 8 to 14 for manufacturing precast products or ready mix concrete.
